# EUROPEAN PATENT APPLICATION

(11) **EP 3 852 047 A1**
(43) Date of publication of application: **21.07.2021**
(21) Application number: 19877061.2
(22) Date of filing: 25.01.2019
(51) Int. Cl.: G06Q 50/10, G06Q 20/06, G06Q 20/12, G06Q 10/10, G06Q 20/38

(54) **BLOCKCHAIN-BASED CONTENT SHARING AND CREATION SERVER, CONTENT DISTRIBUTION SERVER, AND SYSTEM INCLUDING SAME**

(30) Priority: 23.10.2018 US 201862749553 P; 17.01.2019 KR 20190006079
(71) Applicant: Park, Ki Eob, Bundang-Gu Seongnam-Si Gyeonggi-do 13524 (KR)
(72) Inventor: SON, Young Uk, Hwaseong-Si Gyeonggi-do 18507 (KR); HONG, Jong Hyun, Seongnam-si Gyeonggi-do 13344 (KR); CHOI, Se Na, Yongin-si Gyeonggi-do 16836 (KR); MOON, Keon Ryong, Seoul 08728 (KR); JUNG, Pil Kyu, Daejeon 35200 (KR); JANG, Sun Kyoung, Seoul 03395 (KR); PARK, Ki Eob, Seongnam-Si Gyeonggi-do 13524 (KR)
(74) Representative: Grosse, Felix Christopher
(86) International application number: PCT/KR2019/001075
(87) International publication number: WO 2020/085582

(57) **Abstract**

In a content sharing and creation server according to an embodiment, an operation for generating project identification information on the basis of a first user's project start request for generating content, an operation for generating a first smart contract on regulations for issuing a token based on the project start request, an operation for generating a second smart contract on regulations for transferring the token to an account of a second user when the second user transfers a cryptocurrency to a pre-designated contract account, an operation for generating a third smart contract on regulations for transferring the cryptocurrency held in the contract account from the contract account to an account of the first user on the basis of a pre-designated amount or ratio so that the first user receives the cryptocurrency when a transfer execution transaction occurs, and an operation for determining the occurrence of the transfer execution transaction on the basis of evaluation information evaluated by the second user with respect to the progress of the project may be performed.

## Description

The present disclosure relates to a technology for providing a sharing and creation environment for producers and a transparent investment and fair distribution environment using a blockchain.

With the diversification of media for enjoying content and the advent of over the top (OTT) services, the size of the content industry is growing exponentially.

Manpower in various fields and capital are required to complete and provide a single piece of content to consumers. However, in the existing content industry structure, amateur producers or individuals who are interested in the content field, even though their ideas for content are great, have great difficulty in preparing various elements, such as human networks, equipment, space, and copyright protection for content, which are necessary for production. Accordingly, the projects are often interrupted during the content production stage.

Also, even if amateur producers or individuals complete the content, they often face difficulties in achieving the stage of presenting the content to consumers. The content distribution market is dominated by large distributors from the past to the present. For this reason, high-quality content may disappear without an opportunity to be seen by consumers, or content may change in quality toward a commercial direction contrary to the creator's intention. Consequently, there is a high possibility that content consumers will not be able to have the right to enjoy a variety of content.

Although these problems have been raised for a long time, a clear solution has not been found yet. In the existing content industry, it is necessary to develop a solution by creating a new environment in which producers, investors, distributors, and consumers can all be satisfied.

The present invention is directed to solving the problems of the existing content industry structure by activating a community which can provide various idea-sharing and collaboration environments in the overall process of the content industry, such as content production, investment, and distribution, and building a new content platform, in which content producers, investors, distributors, and consumers can all be satisfied, with a blockchain technology which guarantees transparency.

More specifically, the present invention is directed to providing a collaboration environment in which various elements, such as human networks, equipment, and space, which are required for content production are provided within a single platform, providing an environment in which producers can freely share their ideas and produce content within a fence in which the copyright of content can be protected, and providing an environment in which it is possible to make rational decisions through a community for communication with experts in various fields.

The present invention is also directed to allowing producers to disclose their project progress to investors and allowing investors to know how their investments are being used through the blockchain technology such that producers may be motivated to faithfully produce content and an environment of virtuous cycle which induces smoother investments in content being faithfully produced may be provided.

The present invention is also directed to providing an environment in which content completed within a platform may be provided to consumers, the consumers may receive recommendations for content which suits their taste and consume a variety of content, and revenue derived from content may be transparently distributed to producers and investors through shares recorded in the blockchain.

One aspect of the present invention provides a content sharing and creation server including a communication interface configured to communicate with a terminal of a user who participates in a service provided by the server and a blockchain network, one or more memories configured to store instructions for performing a predetermined operation, and one or more processors operatively connected to the one or more memories and configured to execute the instructions. Users participating in the service have accounts in the blockchain network, the one or more memories store information on the accounts, and the one or more processors perform an operation of generating project identification information for specifying a project on the basis of a first user's project start request for content production, an operation of generating a first smart contract of a protocol for issuing tokens based on the project start request in the blockchain network, an operation of generating, in the blockchain network, a second smart contract of a protocol for transferring the tokens to an account of a second user when the second user transfers cryptocurrency to a predesignated contract account, an operation of designating an amount or ratio of cryptocurrency receivable by the first user with respect to the amount of cryptocurrency kept in the contract account during the progress of the project and generating, in the blockchain network, a third smart contract of a protocol for transferring the predesignated amount or ratio of cryptocurrency from the contract account to an account of the first user when a transfer execution transaction for making a transfer is generated by the server in the blockchain network during the progress of the project, and an operation of determining occurrence of the transfer execution transaction on the basis of the second user's evaluation information of the progress of the project.

Another aspect of the present invention provides a content sharing and creation method performed by a content sharing and creation server and including generating project identification information for specifying a project on the basis of a first user's project start request for content production, wherein users participating in a service provided by the server have accounts in a blockchain network, generating, in the blockchain network, a first smart contract of a protocol for issuing tokens based on the project start request, generating, in the blockchain network, a second smart contract of a protocol for transferring the tokens to an account of a second user when the second user transfers cryptocurrency to a predesignated contract account, designating an amount or ratio of cryptocurrency receivable by the first user with respect to the amount of cryptocurrency kept in the contract account during the progress of the project and generating, in the blockchain network, a third smart contract of a protocol for transferring the predesignated amount or ratio of cryptocurrency from the contract account to an account of the first user when a transfer execution transaction for making a transfer in the blockchain network is generated by the server during the progress of the project, and determining occurrence of the transfer execution transaction on the basis of the second user's evaluation information of the progress of the project.

Another aspect of the present invention provides a content system including a content distribution server configured to receive completed content from a content sharing and creation server, provide the content to a consumer terminal while receiving a predetermined amount of money, aggregate the amounts of money at predetermined time periods, and transmit the aggregated amount of money to the content sharing and creation server and the content sharing and creation server configured to receive and convert the aggregated amount of money into a predetermined cryptocurrency and generate, in a blockchain network, a smart contract of a protocol for transferring the converted cryptocurrency to an account of each of users in proportion to the quantity of tokens kept in accounts of the users who possess the tokens mapped to the content.

According to embodiments of the present invention, in a content production step, a producer can be provided with an environment in which the producer can easily carry out a project by searching for optimal team members who will produce content together. Also, an investor can easily check a current situation of content production and can easily invest even a small amount of money to support content production.

According to embodiments of the present invention, in a crowdfunding money providing step, investment funds of investors are kept in a contract account, and the investment funds may be appropriated according to the investors' project evaluation. Therefore, a producer is motivated to disclose the progress of a project and perform the project faithfully, and the investors can watch the progress of the project and check that the investment funds are safely used.

According to embodiments of the present invention, in a content distribution step, a producer can distribute completed content to consumers through a content distribution server, consumers can consume a variety of content by receiving recommendations for content which suits their taste, and investors can transparently receive their shares of revenues derived from content.

According to these embodiments, it is possible to create a new ecosystem in which content producers, investors, and consumers can all be satisfied.

In addition, various effects can be directly or indirectly provided through the present invention.

Hereinafter, various embodiments of the present invention will be described with reference to the accompanying drawings, wherein
- FIG. 1: is a diagram of an operation environment of a system according to an embodiment and a blockchain network.
- FIG. 2: is a block diagram of a content sharing and creation server according to an embodiment.
- FIG. 3: is a block diagram of a content distribution server according to an embodiment.
- FIG. 4: illustrates an embodiment in which a producer discloses a project in a content sharing and creation server.
- FIG. 5: illustrates a specific example of the embodiment of FIG. 4 in which a producer who wants to make a movie receives support for legal protection of content and recruits team members of a project through a community.
- FIG. 6: is an example diagram of a search service in which a content sharing and creation server recommends another producer required for producing a project on the basis of a project start request.
- FIG. 7: illustrates an embodiment of an operation in which a content sharing and creation server generates tokens in a blockchain network and starts crowdfunding on the basis of a request from a producer terminal.
- FIG. 8: illustrates an embodiment in which a content sharing and creation server keeps cryptocurrency for which crowdfunding is completed in a contract account and provides the cryptocurrency according to the progress of a project.
- FIG. 9: illustrates an embodiment in which a content distribution server distributes completed content to consumers and a content sharing and creation server distributes content revenues to investors.

Hereinafter, various embodiments of the present invention will be described with reference to the accompanying drawings. However, this is not intended to limit the present invention to specific modes of practice, and it is to be understood that various modifications, equivalents, and/or alternatives of the embodiments of the present invention fall within the scope of the present invention. For descriptions of the drawings, like elements may be indicated by like reference characters.

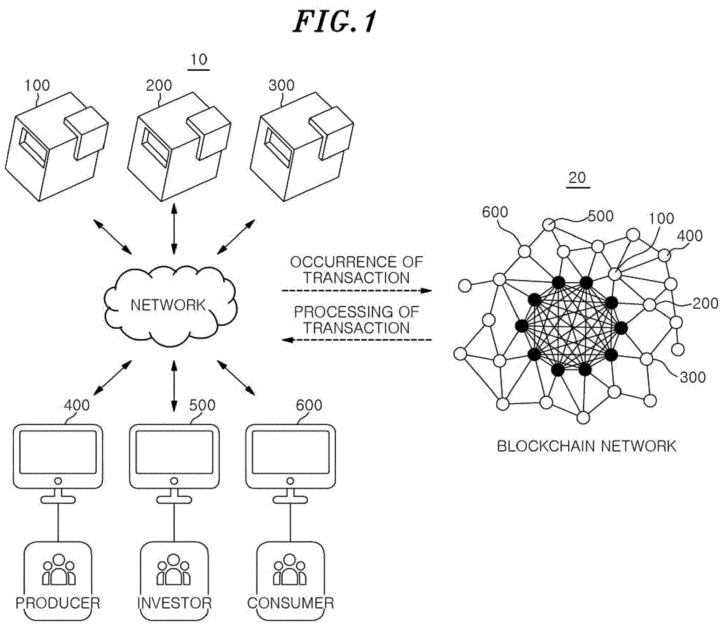

FIG. 1 is a diagram of an operation environment of a content system 10 according to an embodiment and a blockchain network 20. Referring to FIG. 1, the content system 10 according to the embodiment may interoperate with the blockchain network 20. A configuration of the content system 10 according to the embodiment will be described first, followed by the blockchain network 20 which interoperates with the content system 10.

The content system 10 according to the embodiment may provide a content production, investment, and distribution service in cooperation with the blockchain network 20 so that all processes, such as content production, investment, and distribution, may be transparently disclosed to all users who participate in the system, investment funds for content may be safely appropriated, and revenues derived from content may be fairly distributed. Content may include creative works created by creative activities of human such as movies, music, plays, literature, photos, cartoons, animations, and computer games.

The content system 10 according to the embodiment may include a content sharing and creation server 100, a content distribution server 200, an exchange server 300, a producer terminal 400, an investor terminal 500, and a consumer terminal 600. The content sharing and creation server 100, the content distribution server 200, the exchange server 300, the producer terminal 400, the investor terminal 500, and the consumer terminal 600 may be operatively connected through a network to transmit and receive information. For example, the network may include wired and wireless communication networks such as a local area network (LAN), a wide area network (WAN), a virtual network, and remote communication.

In the configuration of the content system 10 according to the embodiment, the producer terminal 400, the investor terminal 500, the consumer terminal 600, etc. may receive a service of the system.

The producer terminal 400 is a terminal used by a producer. The producer may include a person who participates in content production from the initiation of a content idea to the completion. In the content system 10, the producer may find another producer who will do a project for content creation together, find an investor who will sponsor the project, and receive a service of distributing completed content to consumers.

The investor terminal 500 is a terminal used by an investor. The investor may include a person who gives financial support required for content production. The investor may search for content to invest in through the investor terminal 500 in the content system 10, watch a content production process and an investment fund spending process, and receive a service which distributes revenues derived from completed content.

The consumer terminal 600 is a terminal used by a consumer. The consumer may include a person who pays for completed content to receive the content. Through the consumer terminal 600, the consumer may search for content which suits his or her taste in the content system 10 and receive the content in various forms.

Hereinafter, the "producer," "investor," and "consumer" are collectively referred to as a "user," and the "producer terminal 400," "investor terminal 500," and "consumer terminal 600" are collectively referred to as a "user terminal."

In the content system 10, the user may play not only one role but a plurality of roles. For example, the producer may be an investor of his or her content or other content and may be a consumer who consumes a variety of content. In this way, the users may voluntarily play various roles according to their purposes and thereby create a virtuous cycle of ecosystem in which they can help each other.

The user terminals 400, 500, and 600 may be implemented as various forms of devices capable of transmitting and receiving information through the network. For example, the user terminals 400, 500, and 600 may include a portable communication device (e.g., a smart phone), a computer device, a portable multimedia device, a laptop computer, a tablet personal computer (PC), and the like.

In the configuration of the content system 10 according to the embodiment, the content sharing and creation server 100, the content distribution server 200, and the exchange server 300, etc. may provide a service of the system.

The content sharing and creation server 100 may provide a service for achieving content production, investment, and distribution in one platform. The content sharing and creation server 100 may provide an environment in which the producer can efficiently produce content as long as the producer has a good idea, may enable the investor to watch a production process of the content which is being sponsored by the investor and check how the investment funds are being used, and may provide an environment in which revenues derived from the content can be transparently distributed.

The content distribution server 200 may provide a service for distributing completed content to various consumers and transparently distributing revenues derived from the content to the producer and investor.

The exchange server 300 may provide a service for the subjects participating in the content system 10 to trade or convert lawful currency, cryptocurrency, or tokens with each other. The exchange server 300 may include a decentralized exchange. The cryptocurrency and the tokens will be described below with the blockchain network 20.

The blockchain network 20 may interoperate with the content system 10 through the network and process data generated in the content system 10. The blockchain network 20 may be understood as a peer-to-peer (P2P) network system which implements a distributed database (DB) having a blockchain structure. The content system 10 may provide a payment service in cooperation not only with the blockchain network 20 but also with a P2P network system which implements a distributed DB having various other structures (e.g., a directed acyclic graphs (DAG) structure).

The blockchain network 20 may be understood as a P2P network including a plurality of computing devices (hereinafter, "nodes") connected to each other, and each node may include at least one processor to perform calculations. The users participating in the content system 10 may have blockchain account information registered with the blockchain network 20.

The blockchain account information may include a private key and a public key. The private key may function as a digital signature of the user to generate a transaction (e.g. a transaction for transferring a "digital means of payment" from a first user account to a second user account, a transaction for distributing a smart contract to the blockchain network 20, and a transaction for executing the smart contract) in the blockchain network 20. The public key may function as an account address (hereinafter, "account") of the user. In various embodiments, the account may include a human-readable character string or digit string.

The "digital means of payment" mentioned in the above example may include a cryptocurrency. The cryptocurrency is a means of payment which is recorded in a distributed system manner in the blockchain network 20 and may be used as a concept including digital tokens (hereinafter, "tokens"). However, in the description of the present invention, "cryptocurrency" and "token" are used separately as in the following description for convenience of understanding.

In the description of the present invention, the cryptocurrency refers to a means of payment used as a reward for recording data and maintaining trust from the moment at which the blockchain network 20 is created. When referred to in this sense, the cryptocurrency may also be referred to as the "native cryptocurrency." However, the term "cryptocurrency" used in the claims of the present invention does not necessarily include only the concept of "native cryptocurrency" and may also include the concept of the "token."

In the description of the present invention, the tokens are digital means of exchange which are additionally generated in the blockchain network 20 and may have a predetermined use or value. The tokens may be voluntarily generated by the node participating in the blockchain network 20, and information on generation, transfer, and use of the tokens may be recorded in the blockchain network 20 in a distributed system manner.

According to the above-described concepts of terms, when the blockchain network 20 is an Ethereum blockchain network by means of example, the cryptocurrency means Ethereum, and the tokens may be Ethereum Request for Comments (ERC)-20 tokens which are issued in the Ethereum blockchain network 20 according to the ERC-20 protocol.

A transaction may be generated by the nodes (e.g., the content sharing and creation server 100, the content distribution server 200, the exchange server 300, the producer terminal 400, the investor terminal 500, and the consumer terminal 600) which use the blockchain network 20. The transaction may include information related to content production, investment, distribution, revenues, etc. information on transfer of cryptocurrency/tokens, or information on a smart contract. The nodes may check results of processing the transaction through the blockchain.

Transactions occurring in the blockchain network 20 are cryptographically signed with the secret keys of blockchain accounts of subjects which generate the transactions and thus may be recorded in the blockchain network 20 as cryptographic verification data which cannot be tampered with.

When a transaction is generated, the nodes of the blockchain network 20 verify the integrity of the generated transaction and generate a new block, which will come after a previously generated block, on the basis of a consensus algorithm (e.g., proof of work (POW), proof of stake (POS), and delegated proof of stake (DPOS)) implemented in the blockchain network 20. The transaction may be executed while the newly generated block is propagated to the other nodes. The block may include a plurality of pieces of transaction information.

Information on a block may be stored in a transaction DB which is shared among the nodes. The transaction DB may be understood as a public ledger on which the same information is shared among the plurality of nodes.

The blockchain network 20 may distribute and execute various smart contracts provided by the various nodes. The smart contract is a protocol written in digital instructions. When an event complying with a condition of the protocol occurs in the blockchain network 20, a specific transaction may be generated according to the determined protocol, or another smart contract may be executed.

The smart contract may have a contract account. The contract account may be understood as an address at which the node included in the blockchain network 20 or another smart contract generates the transaction to execute the smart contract. When a transaction message is received, the contract account may perform a subsequent operation (e.g., generating a specific transaction, reading or transmitting a message to another account, or generating another smart contract) according to a digital instruction determined in an internal protocol.

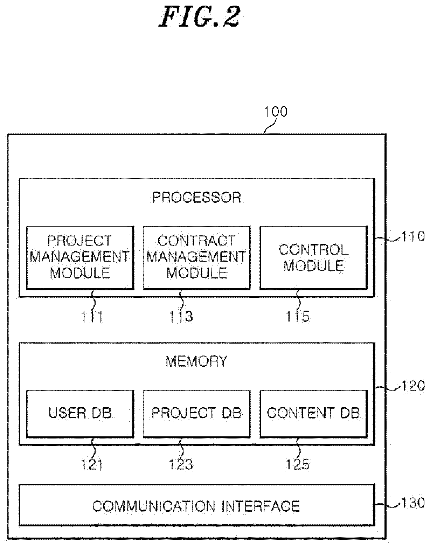

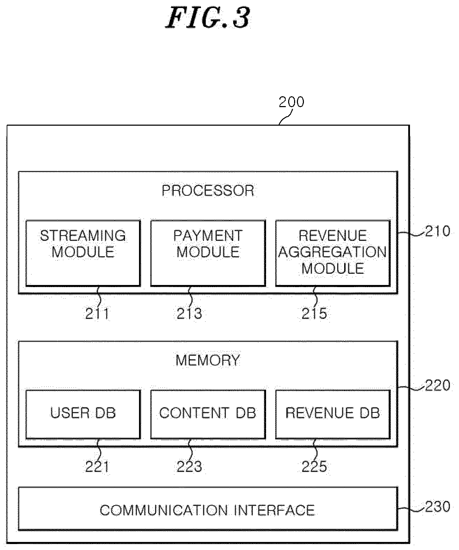

Configurations of the content sharing and creation server 100 and the content distribution server 200 which provide the service of the content system 10 will be described below with reference to FIGS. 2 and 3.

FIG. 2 is a block diagram of the content sharing and creation server 100 according to the embodiment.

Referring to FIG. 2, the content sharing and creation server 100 according to the embodiment may include a processor 110, a memory 120, and a communication interface 130.

The processor 110 may control overall operation of the content sharing and creation server 100. The processor 110 may include a project management module 111, a contract management module 113, and a control module 115. The content sharing and creation server 100 may include one or more processors 110. The processor 110 may execute instructions stored in the memory 120 to operate the project management module 111, the contract management module 113, and the control module 115. Operations performed by the project management module 111, the contract management module 113, and the control module 115 may be understood as operations performed by the processor 110.

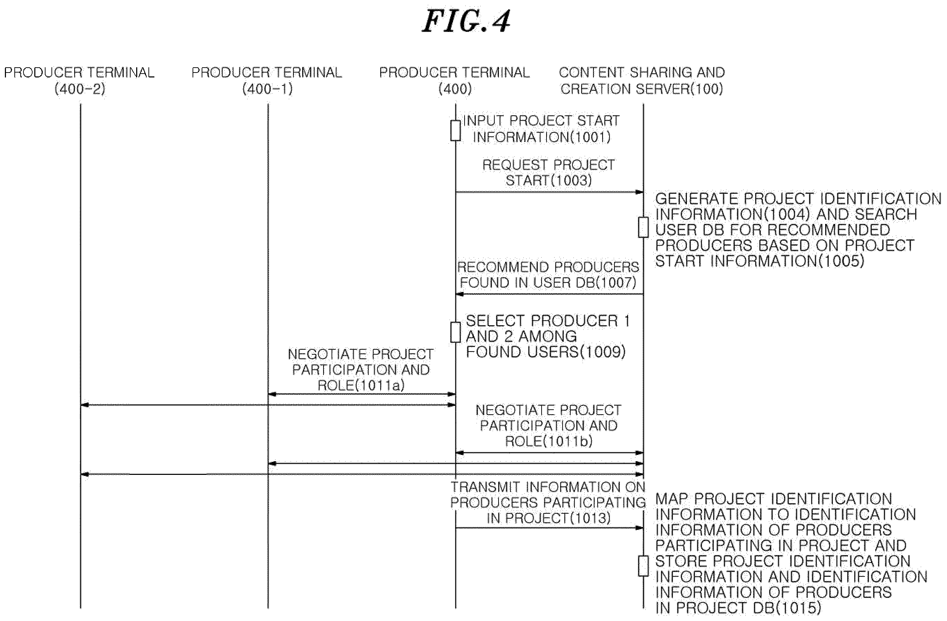

A basic function of each module will be described first through FIG. 2, and then a series of operations performed by the processor will be described through FIGS. 4 to 9.

The project management module 111 may manage and control information related to a project carried out by a producer. For example, the project management module 111 may generate identification information of the project to be carried out by the producer, manage a team member list of the project, and manage a schedule of the project.

The contract management module 113 may generate information related to a smart contract to be distributed to the blockchain network 20, generate the smart contract according to a specific protocol, and distribute the smart contract to the blockchain network 20.

The control module 115 may control an operation related to the progress of the project and the occurrence of a transaction. For example, the control module 115 may search a user DB 121 for a team member who will do the project of the producer together to recommend a found team member to the producer, open an evaluation session for the content, or determine whether to generate a transaction.

The memory 120 may include a user DB 121, a project DB 123, and a content DB 125 and store instructions for causing the processor 110 to perform operations.

The user DB 121 may store identification information of the users participating in the content system 10, blockchain account information of the users, and profile and portfolio information of the users.

The project DB 123 may store all information related to the project disclosed by the producer and information related to a smart contract generated due to the project.

The content DB 125 may store information related to the content which is being produced or has been produced by the producer.

The communication interface 130 communicates with the blockchain network 20 and allows the content sharing and creation server 100 to communicate with the elements included in the content system 10. To this end, the communication interface 130 may include a wireless communication module or a wired communication module.

FIG. 3 is a block diagram of the content distribution server 200 according to the embodiment.

Referring to FIG. 3, the content distribution server 200 according to the embodiment may include a processor 210, a memory 220, and a communication interface 230.

The processor 210 may control overall operation of the content distribution server 200. The processor 210 may include a streaming module 211, a payment module 213, and a revenue aggregation module 215. The content distribution server 200 may include one or more processors 210. The processor 210 may execute instructions stored in the memory 220 to operate the streaming module 211, the payment module 213, and the revenue aggregation module 215. Operations performed by the streaming module 211, the payment module 213, and the revenue aggregation module 215 may be understood as operations performed by the processor 210.

A basic function of each module will be described first through FIG. 3, and then a series of operations performed by the processor 210 will be described through FIGS. 4 to 9.

The streaming module 211 may provide content completed by the producer to the user. For example, the streaming module 211 may recommend content stored in a content DB 223 to reflect the user's taste and provide a streaming service while receiving a predetermined amount of money from the user.

When providing content, the payment module 213 may receive the predetermined amount of money from the user. The money may include lawful currency, cryptocurrency, and tokens. The content distribution server 200 may receive the money using a payment agent service server (not shown).

The revenue aggregation module 215 may aggregate revenues derived from specific content at predetermined time periods. The revenue aggregation module 215 may aggregate revenues directly obtained by selling the content, streaming revenues according to the number of views and the play time of the content, revenues derived from ads combined with the content, and the like.

The memory 220 may include a user DB 221, the content DB 223, and a revenue DB 225 and store instructions for causing the processor 210 to perform operations.

The user DB 221 may store preferences of the users, the identification information of the users, and the blockchain account information of the users.

The content DB 223 may store content to be distributed and information related to the content (e.g., a producer and project information of the producer).

The revenue DB 225 may include information on revenues obtained by selling content, streaming revenues according to the number of views and the play time of the content, and revenues derived from ads of the content.

The communication interface 230 communicates with the blockchain network 20 and allows the content distribution server 200 to communicate with the elements included in the content system 10. To this end, the communication interface 230 may include a wireless communication module or a wired communication module.

In the description of the present invention, a subject which provides the service of the content system 10 is divided into the content sharing and creation server 100, the content distribution server 200, and the exchange server 300. However, the content sharing and creation server 100 may include all of the above-described configurations and functions of the content distribution server 200 and the exchange server 300, and all of the functions and operations may be performed in the single server.

Operations in which the subjects constituting the content system 10 interoperate with each other will be described below with reference to FIGS. 4 to 9.

FIG. 4 illustrates an embodiment of an operation in which the content sharing and creation server 100 generates a project environment according to a project start request of the producer terminal 400.

The producer terminal 400 may receive project start information from a producer who wants to produce specific content (1001). The project start information may include a content proposal, a progress plan, and information on members, equipment, space, etc. which are elements required for carrying out a project.

The producer terminal 400 may transmit a project start request message to the content sharing and creation server 100 on the basis of the project start information (1003). A project start request may be included in the project start information input by the producer. The content sharing and creation server 100 may check the project start information by parsing the project start request message.

The content sharing and creation server 100 may generate project identification information (e.g., a project identifier (ID)) for specifying a project on the basis of the project start request, map the disclosed project identification information and data included in the project start request to each other, and store the project identification information and the data in the project DB (1004).

The content sharing and creation server 100 may select another producer stored in the user DB 121 as a team member who is appropriate for doing the project on the basis of the project start request (1005).

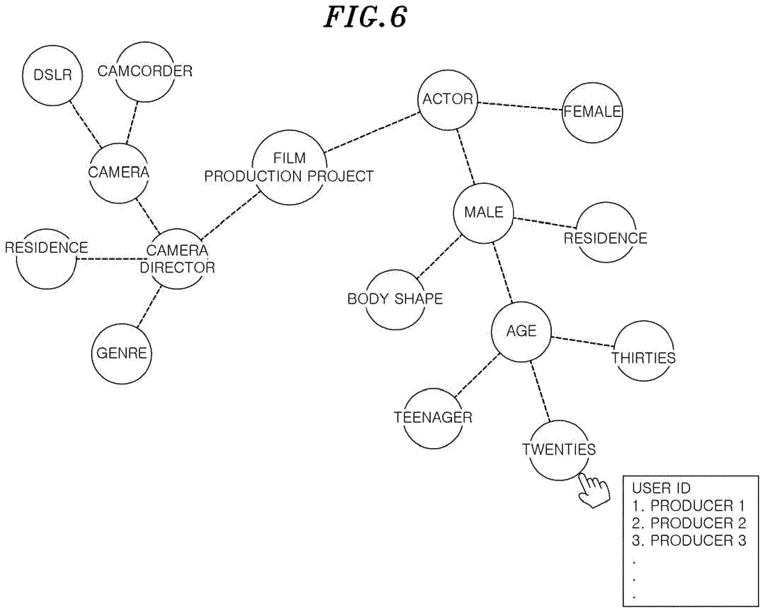

FIG. 6 is an example diagram of a search service in which the content sharing and creation server 100 recommends another producer required for producing a project on the basis of a project start request.

The content sharing and creation server 100 may calculate degrees of closeness and appearance frequencies of the pieces of metadata included in the user DB 121 on the basis of the metadata about fields, businesses, careers, etc. mapped to profiles and portfolios of users in the user DB. When a specific keyword input by a producer is received from the producer terminal, the content sharing and creation server 100 may extract one or more pieces of metadata having a high degree of closeness to the keyword and a high appearance frequency and output identification information (e.g., user IDs) including the extracted pieces of metadata.

For example, when requesting project start, the producer may directly input the keyword of the project or select the keyword in a previously provided list. When the keyword selected by the producer is "film production," the content sharing and creation server 100 may first extract "camera director, actor" as metadata having a high degree of closeness to "film production" or a high appearance frequency and second extract "camera, residence, genre" as metadata having a high degree of closeness to "camera director" or a high appearance frequency. Extraction steps may be changed so that metadata related to the first and second steps may be continuously extracted according to the producer's selection or setting. The content sharing and creation server 100 may connect the keyword and metadata in order of extraction steps so that the metadata extracted from the initial keyword may reflect the order of the first and second extraction steps and may provide the connected keyword and the metadata to the producer terminal 400 in the form of a mind map or a tree structure. Here, when the producer selects a specific piece of metadata, identification information of a user who includes all metadata related to the keyword may be searched for in the user DB and output.

For example, when the producer selects "twenties" in FIG. 6, the IDs of other producers including all of the metadata "film production, actor, male, age, twenties" may be output. When the producer who starts the project selects the output ID, the content sharing and creation server 100 may search the user DB 121 for the profile and portfolio of the other producer, which are mapped to the selected producer ID and stored, and provide the detailed information (1007).

Among the other producers recommended by the content sharing and creation server 100, the producer who will do the project together may be input to the producer terminal 400 (1009). For example, when the producer selects producer 1 and producer 2 through the producer terminal 400, personal contact information of a terminal 400-1 of producer 1 and a terminal 400-2 of producer 2 may be provided to the producer terminal 400 such that all of the producers may directly negotiate project participation with each other (1011a) or may negotiate project participation through the content sharing and creation server 100 (1011b).

The producer terminal 400 may transmit information on the producer who consents to participate in the project to the content sharing and creation server 100 (1013). For example, when both producer 1 and producer 2 determine to participate in the project, the IDs of producers 1 and 2 may be transmitted to the content sharing and creation server 100.

The content sharing and creation server 100 may map the project identification information to the identification information of the producers participating in the project and store the project identification information and the identification information of the producers in the project DB.

According to the embodiments of FIGS. 4 and 6, the producer can be provided with an environment in which it is possible to recruit optimal team members for producing content together and efficiently carry out a project.

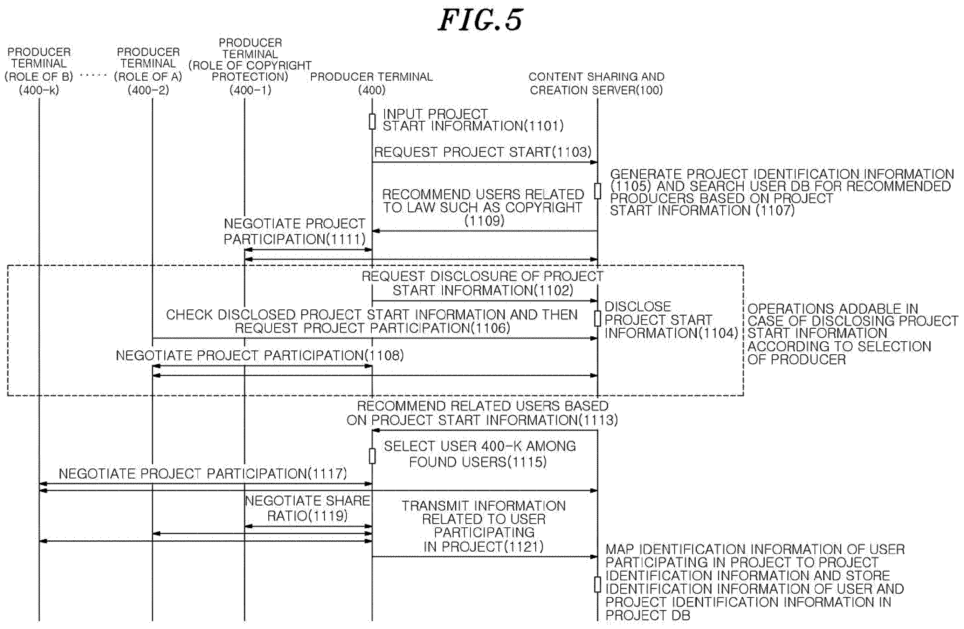

FIG. 5 illustrates a specific example of the embodiment of FIG. 4 in which a producer who wants to make a movie receives support for legal protection of content and recruits team members of a project through a community. Details of messages transmitted between the producer terminal 400 and the content sharing and creation server 100, a user search operation, and a data storage operation have been described with reference to FIG. 4, and thus overlapping content is omitted.

Project start information may be input to the producer terminal 400 by a user who wants to produce content designed by himself or herself (hereinafter, "project owner") (1101). For example, when the project owner wants to make a movie, the project start information may include a scenario of the movie, team members required for film production, and information on equipment and space required for film production.

The content sharing and creation server 100 may generate project identification information which specifies the new project according to the project start request and store the project identification information in the project DB 123 (1105).

The content sharing and creation server 100 may recommend other users stored in the user DB 121 as team members appropriate for doing the project on the basis of the team members and the equipment information input by the project owner (1107). For example, the content sharing and creation server 100 may analyze the project start information and preferentially recommend users who are legal experts among users stored in the user DB 121 when it is determined that legal protection for the content is necessary first (1109).

According to an embodiment, the content sharing and creation server 100 may recommend a copyright expert as a user who will participate in the project as a person in charge of content copyright protection, and the project owner may directly negotiate project participation with the producer terminal 400-1 of the user who is the copyright expert through the producer terminal 400 or may negotiate project participation through a community provided by the content sharing and creation server 100 (1111).

When a method for content copyright protection is prepared as the copyright expert participates in the project, the project owner may disclose the project start information in the community provided by the content sharing and creation server 100 according to a selection. For example, the project owner may disclose a scenario of the movie as the project start information, disclose actors and actresses, a lighting director, and a camera director as team members required for film production and disclose a camera, a studio, etc. as equipment required for film production. When the project start information is disclosed, users who participate in the community provided by the content sharing and creation server 100 may check the project start information through producer terminals 400-1 to 400-k. When there is a desire to participate in a specific project, the users may request participation in the desired project through the community provided by the content sharing and creation server 100.

The content sharing and creation server 100 may provide user information of the producer terminals 400-1 to 400-k which request participation in the project to the producer terminal 400. The project owner may directly negotiate project participation with the desired producer terminal 400-2 in the user information recommended through the producer terminal 400 or may negotiate project participation through the community provided by the content sharing and creation server 100 (1108).

Apart from disclosure of the project start information, the project owner may negotiate project participation with the users recommended by the content sharing and creation server 100. The content sharing and creation server 100 may select other users stored in the user DB 121 as team members appropriate for doing the project on the basis of information on the team members, equipment, and space required for the project (1113). For example, when the project owner designates an "actor or actress in his or her thirties," a "lighting director for horror movie," an "ultra-high-speed camera," and a "closed building" as necessary team members, equipment, and space, the content sharing and creation server 100 may recommend a user list of actors or actresses and lighting directors appropriate for the movie scenario, users possessing an ultra-high speed camera, and a list of users who can provide a closed building.

The project owner may check the user list through the producer terminal 400 to select a user with whom he or she wants to do the project (1115) and may directly negotiate project participation through the producer terminal 400-k of the selected user or may negotiate project participation through the community provided by the content sharing and creation server 100 (1117).

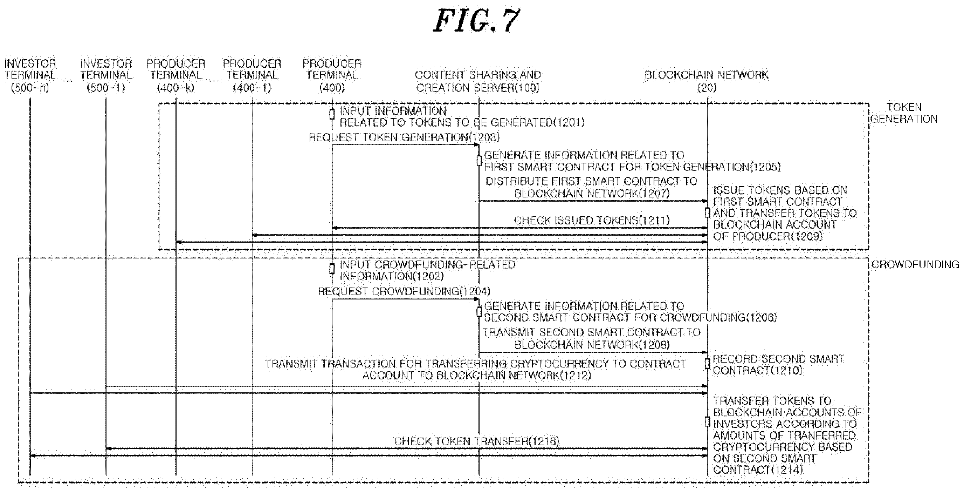

When a predetermined ratio or more of team members participate in the project, the project owner may negotiate shares with the team members participating in the project (1119). For example, when project owner A, copyright expert B, lighting director C, actor or actress D, user E who provides a production studio, and user F who provides a camera participate in the project, their shares may be negotiated as 20% for A, 10% for B, 10% for C, 10% for D, 10% for E, and 5% for F, and the remaining 35% may be reserved as a share to be given to a team member who will participate in the project later or a user who provides a good idea for content production through the community of the content sharing and creation server 100. Here, the shares are related to token distribution ratios which will be described with reference to FIG. 7, and details of the shares will be described below with reference to FIG. 7.

The project owner may transmit information related to the users who participate in the project to the content sharing and creation server 100 through the producer terminal 400 (1121). The information related to the users who participate in the project may include user identification information of the team members who participate in the project, the role of each team member, and information on the shares of the team members and the reserved share. The content sharing and creation server 100 may map the information related to the users who participate in the project to the project identification information and store the information and the project identification information in the project DB 123 (1123).

The types of information listed in the above description of FIG. 5 are detailed examples, and the scope of the embodiments of the present invention is not limited thereto.

FIG. 7 illustrates an embodiment of an operation in which the content sharing and creation server 100 generates tokens in the blockchain network 20 and starts crowdfunding on the basis of a request from the producer terminal 400.

According to an embodiment, tokens generated in the blockchain network 20 may be used as media for the producer to receive financial support for the project from the investor.

Information on tokens to be generated may be input to the producer terminal 400 by a producer (1201). The information on tokens may include the project identification information disclosed by the producer, the name of tokens, the amount of issued tokens, share ratios of the team members in the project, the ratio of a reserved share in the project, the ratio of tokens to be used for crowdfunding, and information on accounts to which tokens will be issued.

For example, when a ratio of tokens to be used for crowdfunding to the total quantity of tokens to be issued is 60%, 60% of the tokens to be issued may be designated to be issued to a blockchain account mapped to the producer terminal 400 or a blockchain account of the content sharing and creation server 100 so as to be used for crowdfunding which will be described below. The other 40% of the tokens may be issued to the blockchain account of each team member according to the team member shares and the reserved share in the project described above with reference to FIG. 5. The reserved share may be issued to the blockchain account mapped to the producer terminal 400 or the blockchain account of the content sharing and creation server 100, and the tokens may be distributed to a new team member who participates later or a user who proposes an idea for the content in the community provided by the content sharing and creation server 100.

The producer terminal 400 may transmit a token generation request message to the content sharing and creation server 100 on the basis of the input information (1203). The token generation request message may be included in the project start request message of FIGS. 4 and 5.

The content sharing and creation server 100 may generate information related to a first smart contract of a protocol for issuing a determined quantity of tokens to a designated account on the basis of the token generation request message of FIG. 7 (1205) and may distribute the first smart contract to the blockchain network 20 (1207). The first smart contract may include project identification information, the name of tokens, the quantity of issued tokens, accounts to which tokens will be issued, and information on the ratio of tokens to be issued to each account.

The content sharing and creation server 100 may designate information or parameters to be included in the above-described first smart contract as a protocol so that the same protocol may apply to tokens issued with the first smart contract. For example, when the blockchain network 20 is an Ethereum blockchain network, ERC-20 is one of such protocols.

The blockchain network 20 may execute the first smart contract to issue a determined quantity of tokens to an account designated in the first smart contract (1209).

The producers who are the team members of the project may access the blockchain network 20 through each of the producer terminals 400 and 400-1 to 400-k to check tokens issued to their blockchain accounts (1211).

Information on crowdfunding may be input to the producer terminal 400 by the producer (1202). The crowdfunding may include a process in which the producer gives tokens issued as a reward for invested cryptocurrency to investors who are willing to finance in order to receive financial support (e.g., cryptocurrency) required for doing the project from investors.

Tokens received by the investor may work as his or her share of the content and a right to watch the progress of the project. The shares of the content that are described above through FIG. 5 and that the team members in the project possess mean ratios for receiving distributed tokens. After tokens are issued, a share ratio of the content may be determined according to a ratio of the quantity of tokens that each team member has to the total quantity of issued tokens.

The producer may disclose the crowdfunding information to the blockchain network 20 to induce users who want to support the project to participate in the project as investors. The crowdfunding information may include the project identification information, a project idea, a project proposal, project team members, a project schedule, a token price, a funding period, the target amount of fundraising, and information on a contract account for storing tokens to be given to investors and receiving cryptocurrency from investors during the crowdfunding campaign.

The producer terminal 400 may request the content sharing and creation server 100 to start the crowdfunding (1204).

The crowdfunding according to the embodiment may be performed in the blockchain network 20. The content sharing and creation server 100 may generate information related to a second smart contract (1206) so that the crowdfunding may be performed in the blockchain network 20. Then, the content sharing and creation server 100 may transmit the second smart contract to the blockchain network 20 (1208). The second smart contract may include the crowdfunding-related information according to the protocol of digital instructions for transferring a preset quantity or ratio of tokens to the account of an investor with respect to a predetermined amount of currency when the predetermined amount of cryptocurrency is transferred from the account of the investor to the contract account.

The second smart contract may include digital instructions for transferring back the cryptocurrency transferred to the contract account to the original account of the investor from which the cryptocurrency is transferred when the target amount of fundraising is not achieved within the determined funding period.

The content sharing and creation server 100 may designate information or parameters to be included in the above-described second smart contract as a protocol so that the same protocol may apply to crowdfunding performed with the first smart contract.

The blockchain network 20 may distribute the second smart contract to the nodes and cause an operation to be performed according to the protocol of the second smart contract when a transaction occurs in the contract account (1210).

When the second smart contract is distributed to the blockchain network 20, investor terminals 500-1 to 500-n may transmit a transaction for transferring cryptocurrency to the contract account to the blockchain network 20 (1212).

The blockchain network 20 may generate a transaction for transferring the quantity or ratio of tokens preset in the determined protocol to the account of an investor according to the quantity of cryptocurrency transferred to the contract account of the second smart contract by the investor (1214). The investor terminals 500-1 to 500-n may access the blockchain network 20 to check details of the token transfer (1216).

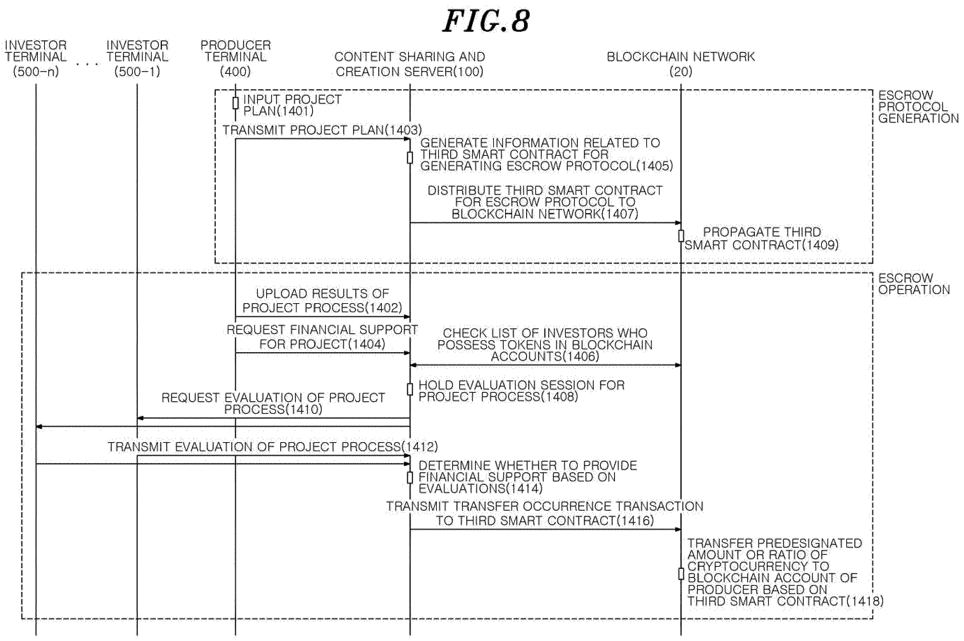

According to the embodiments of FIG. 7, problems, such as contract failure, may not occur between the producer and the investor due to the second smart contract. The investor can easily check project-related information through the blockchain network 20, and anyone can invest even a small amount of money. The investment fund is not kept in the account of the producer but kept in the contract account. Accordingly, the investment fund is safely kept through the embodiment of FIG. 8, which will be described below, and can be transparently used in the progress of the project.

FIG. 8 illustrates an embodiment in which the content sharing and creation server 100 keeps cryptocurrency for which crowdfunding is completed in a contract account and provides the cryptocurrency according to the progress of a project.

According to the embodiment, the producer submits a plan for funds (e.g., cryptocurrency) required for doing the project in order to use the cryptocurrency transferred to the contract account after the crowdfunding is completed, and it is evaluated by the users whether the project is in progress according to the plan. When the evaluation results satisfy a criterion, the producer can receive the cryptocurrency from the contract account and use the cryptocurrency.

A project plan may be input to the producer terminal 400 by the producer (1401). The producer terminal 400 may transmit the project plan to the content sharing and creation server 100 (1403). The project plan may include a project process, a specific plan for each step, and the amount or ratio of cryptocurrency designated as a fund required for each step. For example, when the project process is planned as "preliminary step · production step · computer graphics (CG) step · final modification step," the producer may designate the amount of cryptocurrency to be paid for each step as "100 . 500 . 400 . 200," or 5% . 50% . 30% . 15%.

The content sharing and creation server 100 may receive the project plan and generate related information to be included in a third smart contract to generate an escrow protocol for the cryptocurrency kept in the contract account when it is determined that the plan is appropriate (1405). When it is determined that the project plan is inappropriate, the content sharing and creation server 100 may request the producer terminal 400 to correct the project plan.

The third smart contract-related information may include information on each step of the project process, the amount or ratio of cryptocurrency designated to be given in each step of the project process, account information designated by the server 100 as a subject which allows a transfer execution transaction for transferring a designated amount or ratio of cryptocurrency, and information on an account for receiving the designated amount of ratio of cryptocurrency.

The content sharing and creation server 100 may distribute the third smart contract in which the escrow protocol is written in digital instructions on the basis of the third smart contract-related information to the blockchain network 20 (1407). The third smart contract may include digital instructions of a protocol for transferring the amount or ratio of cryptocurrency designated for each step from the project account to the account of the producer in each step of the project process when a transfer execution transaction occurs through a signature of a private key designated by the server.

The blockchain network 20 may distribute the third smart contract to the nodes and cause an operation to be performed according to the protocol of the third smart contract when a transaction occurs in the third smart contract (1409).

According to the embodiment, the producer may upload results of the project process and may be allowed to use the cryptocurrency kept in the contract account through evaluation of the results.

The producer terminal 400 may upload the results of the project process to the content sharing and creation server 100 (1402) and transmit a message for requesting financial support for the project to the content sharing and creation server 100 (1404). The results may include tangible or intangible evidence calculated to complete the content by performing each step of the project.

The content sharing and creation server 100 may check the second smart contract in the blockchain network 20 and check the investors through the user DB 121 on the basis of a list of accounts possessing tokens (1406) such that the investors may evaluate the uploaded results. In the user DB 121, investor accounts and investor identification information (e.g., investor IDs) may be mapped to each other and stored in advance.

The content sharing and creation server 100 may hold an evaluation session for the project process (1408) and request the investor terminal 500 of the investor checked through the blockchain network 20 to evaluate the project process (1410 and 1412).

The investor terminals 500-1 to 500-n may access a content production environment providing server and evaluate the project process through the evaluation session. For example, the investors may check the results and vote for or against the support.

The content sharing and creation server 100 may determine whether to provide the financial support on the basis of the evaluations of the investors (1414). The content sharing and creation server 100 may set an evaluation criterion so that the producer can receive a support fund for the corresponding step when the investors' votes for the support exceed a preset number or ratio.

When the evaluation criterion is satisfied, the content sharing and creation server 100 may transmit a transfer occurrence transaction to the third smart contract (1416) so that a designated amount or ratio of cryptocurrency may be transferred from the contract account to the producer account. The content sharing and creation server 100 may sign a transfer execution transaction with the private key designated in the third smart contract and transmit the signed transfer execution transaction to the blockchain network 20.

When the transfer execution transaction complies with a condition of the protocol of the third smart contract, the blockchain network 20 may generate a transaction for transferring the predesignated amount or ratio of cryptocurrency from the contract account to the account of the producer (1418).

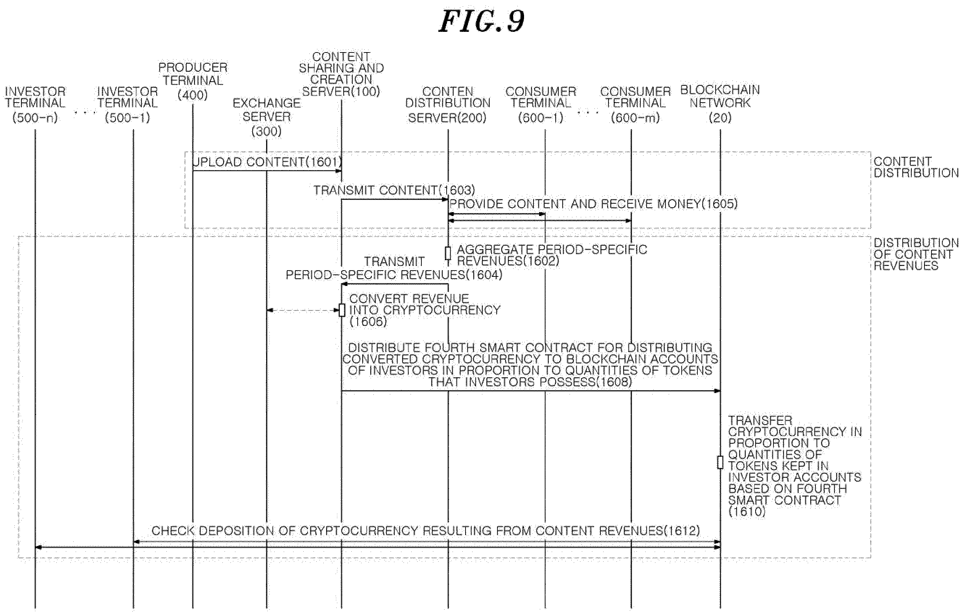

According to the embodiments of FIG. 8, due to the third smart contract, the investment funds of the investors can be kept in the contract account, and the investment funds can be appropriated on the basis of the investors' evaluation of the project. Accordingly, the producer is motivated to disclose and faithfully carry out the project process, and the investors can watch the progress of the project and check that the investment funds are safely used. A support process is repeated for each step of the project through the embodiment of FIG. 8, and thus the producer can complete the content. The completed content can be distributed to consumers according to an embodiment of FIG. 9 which will be described below.

FIG. 9 illustrates an embodiment in which the content distribution server 200 distributes completed content to consumers and the content sharing and creation server 100 distributes content revenues to investors.

The producer terminal 400 may upload the completed content to the content sharing and creation server 100 (1601). The content sharing and creation server 100 may transmit the content to the content distribution server 200 (1603).

The content distribution server 200 may provide the content to the consumer terminal 600 and receive a predetermined amount of money in return for the content (1605). The money may include lawful currency, cryptocurrency, or tokens, and the consumer terminal 600 may pay the amount of money through an electronic payment service server (not shown). The content distribution server 200 may recommend content which reflects the user's taste to the consumer terminal 600 and may provide a content sales or streaming service.

The content distribution server 200 may aggregate revenues derived from specific content at predetermined time periods (1602). The aggregation of revenue may reflect revenues directly obtained by selling the content to consumers, streaming revenues according to the number of views and the play time of the content, revenues derived from ads, and the like. The content distribution server 200 may transmit the aggregated revenue to the content sharing and creation server 100 (1604).

The content sharing and creation server 100 may convert the received revenue into cryptocurrency so that the received revenue may be distributed to the investors (when the producer possesses tokens issued by himself or herself, the producer is also included in the investors) in the blockchain network 20 (1606). The content sharing and creation server 100 may convert cryptocurrency thereof and the received revenue into each other by itself or convert the received revenue into cryptocurrency through the exchange server 300.

The content sharing and creation server 100 may generate a fourth smart contract of a protocol for transferring cryptocurrency to the account of each investor in proportion to the quantity of tokens kept in the account of each investor and distribute the fourth smart contract to the blockchain network 20 (1608). The fourth smart contract may include an account in which cryptocurrency to be paid to the investors is deposited, a list of accounts possessing tokens, and information on the quantity of tokens kept in each account.

The blockchain network 20 may generate a transaction for transferring cryptocurrency from the account possessing the cryptocurrency to be paid to the accounts of the investors in proportion to a ratio of tokens according to the protocol of the fourth smart contract (1610). The investors can access the blockchain network 20 to check the distributed cryptocurrency received due to content revenues (1612).

According to the embodiments of FIG. 9, the producer can distribute the completed content to consumers through the content distribution server 200, and the investors can transparently receive their shares of revenues derived from the content in which the investors invest.

The subjects and steps of operating methods of the subjects included in the content system 10 can be understood through the configurations described with reference to FIGS. 2 and 3 and operations of the subjects included in the content system 10 described with reference to FIGS. 4 to 9. The orders of operations described with reference to FIGS. 4 to 9 are only exemplary, and the time-series orders are not limited thereto and may be logically changed according to design.

It should be appreciated that various embodiments of the present invention and the terms used therein are not intended to limit the technological characteristics set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more items unless the context clearly indicates otherwise.

As used herein, each of such phrases as "A or B," "at least one of A and B," "at least one of A or B," "A, B, or C," "at least one of A, B, and C," and "at least one of A, B, or C" may include any one of or all possible combinations of the items enumerated together in a corresponding one of the phrases. Such terms as "1^{st}" and "2^{nd}" or "first" and "second" may be used to simply distinguish a corresponding element from another and does not limit the elements in other aspect (e.g., importance or order). It is to be understood that when an element (e.g., a first element) is referred to, with or without the term "operatively" or "communicatively," as "coupled" or "connected," it means that the element may be coupled with another element directly (e.g., in a wired manner), wirelessly, or through a third element.

As used herein, the term "module" may include a unit implemented in hardware, software, or firmware and may be interchangeably used with other terms, for example, "logic," "logic block," "part," or "circuitry." A module may be a single integral component or a minimum unit or part thereof which performs one or more functions. For example, according to an embodiment, the module may be implemented in a form of an application-specific integrated circuit (ASIC).

Various embodiments of the present invention may be implemented as software (e.g., a program) including one or more instructions which are stored in a storage medium (e.g., memory) readable by a machine (e.g., an electronic device). The storage medium may include a random access memory (RAM), a memory buffer, a hard drive, a database, an erasable programmable read-only memory (EPROM), an electrically erasable read-only memory (EEPROM), a read-only memory (ROM), and/or the like.

Also, a processor in the embodiments of the present invention may invoke at least one of one or more instructions stored in the storage medium and execute it. This allows the machine to be operated to perform at least one function according to the at least one instruction invoked. The one or more instructions may include code generated by a compiler or code executable by an interpreter. The processor may be a general-use processor, a field programmable gate array (FPGA), ASIC, a digital signal processor (DSP), and/or the like.

The machine-readable storage medium may be provided in the form of a non-transitory storage medium. Here, the term "non-transitory" simply means that the storage medium is a tangible device and does not include a signal (e.g., electromagnetic waves). This term does not differentiate between the case where data is semi-permanently stored in the storage medium and the case where data is temporarily stored in the storage medium.

The methods according to the various embodiments disclosed herein may be included and provided in a computer program product. The computer program product may be traded as a product between a seller and a buyer. The computer program product may be distributed in the form of a machine-readable storage medium (e.g., compact disc read only memory (CD-ROM)) or distributed (e.g., downloaded or uploaded) online through an application store (e.g., PlayStore™) or directly between two user devices (e.g., smart phone). When distributed online, at least a part of the computer program product may be at least temporarily stored or temporarily generated in the machine-readable storage medium such as memory of the manufacturer's server, a server of the application store, or a relay server.

According to various embodiments, each element (e.g., a module or a program) of the above-described components may include a single entity or multiple entities. According to various embodiments, one or more of the above-described elements or operations may be omitted, or one or more other elements or operations may be added. Alternatively or additionally, a plurality of elements (e.g., modules or programs) may be integrated into a single element. In this case, the integrated element may still perform one or more functions of each of the plurality of elements in the same or similar manner as they are performed by a corresponding one of the plurality of elements before the integration. According to various embodiments, operations performed by the module, the program, or another component may be carried out sequentially, in parallel, repeatedly, or heuristically, one or more of the operations may be executed in a different order or omitted, or one or more other operations may be added.

## Claims

1. A content sharing and creation server comprising:
a communication interface configured to communicate with a terminal of a user who participates in a service provided by the server and a blockchain network;
one or more memories configured to store instructions for performing a predetermined operation; and
one or more processors operatively connected to the one or more memories and configured to execute the instructions,
wherein users participating in the service have accounts in the blockchain network, the one or memories store information on the accounts, and
the one or more processors perform:
an operation of generating project identification information for specifying a project on the basis of a first user's project start request for content production;
an operation of generating, in the blockchain network, a first smart contract of a protocol for issuing tokens based on the project start request;
an operation of generating, in the blockchain network, a second smart contract of a protocol for transferring the tokens to accounts of second users when the second users transfer cryptocurrency to a predesignated contract account;
an operation of designating an amount or ratio of cryptocurrency receivable by the first user with respect to the amount of cryptocurrency kept in the contract account during progress of the project and generating, in the blockchain network, a third smart contract of a protocol for transferring the predesignated amount or ratio of cryptocurrency from the contract account to an account of the first user when a transfer execution transaction for making a transfer in the blockchain network is generated by the server during the progress of the project; and
an operation of determining occurrence of the transfer execution transaction on the basis of the second users' evaluation information of the progress of the project.

2. The content sharing and creation server of claim 1, wherein the one or more processors further perform, when the progress of the project is completed and content is generated:
an operation of providing the content while receiving a predetermined amount of money from a consumer terminal and aggregating the amount of received money;
an operation of converting the amount of received money into the cryptocurrency; and
generating, in the blockchain network, a fourth smart contract of a protocol for transferring the converted cryptocurrency to the account of each of the second users in proportion to a quantity of tokens kept in the account of each of the second users.

3. The content sharing and creation server of claim 1, wherein the project start request includes a proposal for the content, elements required for the progress of the project, and information on a keyword of the project.

4. The content sharing and creation server of claim 3, wherein the one or more processors recommend information of some of the users participating in the service to the first user on the basis of the elements required for the progress of the project and store information on a team member selected to do the project together among the some users and information on a share for the team member in the memory.

5. The content sharing and creation server of claim 4, wherein the one or more memories store identification information of the users participating in the service, map metadata designated by the users to the identification information of the users, and store the metadata mapped to the identification information, and
the one or more processors makes the recommendation by calculating degrees of closeness between pieces of metadata stored in the memory and appearance frequencies of the pieces of metadata, determining first metadata having a high degree of closeness and a high appearance frequency among the pieces of metadata corresponding to the keyword, and outputting identification information of a user, which is mapped to the first metadata and stored, to the first user.

6. The content sharing and creation server of claim 5, wherein the one or more processors makes the recommendation by, after determining the first metadata, determining second metadata having a high degree of closeness to the first metadata and a high appearance frequency, outputting the first metadata and the second metadata in a mind map format in order of metadata determined from the keyword, and providing identification information of a user, which is mapped to all of the keyword, the first metadata, and the second metadata and stored, to the first user.

7. The content sharing and creation server of claim 4, wherein the first smart contract includes identification information of the project, a name of the tokens, a quantity of issued tokens, each account to which the tokens will be issued, and information on a ratio of tokens allotted to each account to the quantity of issued tokens, and
the first smart contract includes a digital instruction of a protocol for issuing a ratio of tokens allotted to the project team member to the account of the team member according to the share for the project member.

8. The content sharing and creation server of claim 1, wherein the second smart contract includes an address of the contract, a period for receiving the cryptocurrency in the address of the contract, and information on a quantity of tokens transferrable from the address of the contract to addresses of the second users.

9. The content sharing and creation server of claim 8, wherein the second smart contract includes a digital instruction for transferring the cryptocurrency received from the second users to the accounts of the second users when all of the quantity of transferrable tokens are not given away within the period for receiving the cryptocurrency.

10. The content sharing and creation server of claim 1, wherein the third smart contract includes information on each step of the progress of the project, an amount or ratio of cryptocurrency designated for each step, an account of the server as a subject which will allow the transfer execution transaction, and information on the account for receiving the designated cryptocurrency.

11. The content sharing and creation server of claim 10, wherein the third smart contract includes a digital instruction of a protocol for transferring the amount or ratio of cryptocurrency designated for each step of the progress of the project from the contract account to the account of the first user on the basis of the amount or ratio of cryptocurrency designated for each step when the transfer execution transaction occurs in each step through a signature of a private key designated by the server.

12. A content system comprising:
a content distribution server; and
the content sharing and creation server of claim 1,
wherein the content distribution server receives completed content from the content sharing and creation server, provides the content to a consumer terminal while receiving a predetermined amount of money, aggregates amounts of money at predetermined time periods, and transmits the aggregated amount of money to the content sharing and creation server, and
the content sharing and creation server receives and converts the aggregated amount of money into a predetermined cryptocurrency and further performs an operation of generating, in a blockchain network, a smart contract of a protocol for transferring an amount of converted cryptocurrency to an account of each of users in proportion to a number of tokens kept in accounts of the users who possess the tokens mapped to the content.

13. A content sharing and creation method performed by a content sharing and creation server, the method comprising:
generating project identification information for specifying a project on the basis of a first user's project start request for content production, wherein users participating in a service provided by the server have accounts in a blockchain network;
generating, in the blockchain network, a first smart contract of a protocol for issuing tokens based on the project start request;
generating, in the blockchain network, a second smart contract of a protocol for transferring the tokens to accounts of second users when the second users transfer cryptocurrency to a predesignated contract account;
designating an amount or ratio of cryptocurrency receivable by the first user with respect to the amount of cryptocurrency kept in the contract account during progress of the project and generating, in the blockchain network, a third smart contract of a protocol for transferring the predesignated amount or ratio of cryptocurrency from the contract account to the account of the first user when a transfer execution transaction for doing a transfer in the blockchain network is generated by the server during the progress of the project; and
determining occurrence of the transfer execution transaction on the basis of the second users' evaluation information of the progress of the project.

14. The content sharing and creation method of claim 13, further comprising, when the progress of the project is completed and content is generated:
providing the content while receiving a predetermined amount of money from a consumer terminal and aggregating the amount of received money;
converting the amount of received money into the cryptocurrency; and
generating, in the blockchain network, a fourth smart contract of a protocol for transferring the converted cryptocurrency to the account of each of the second users in proportion to a quantity of tokens kept in the account of each of the second users.

15. The content sharing and creation method of claim 13, wherein the project start request includes a proposal for the content, elements required for the progress of the project, and information on a keyword of the project,
further comprising:
recommending information of some of the users participating in the service to the first user on the basis of the elements required for the progress of the project; and
storing information on a team member selected to do the project together among the some users and information on a share for the team member in a memory,
wherein the first smart contract includes identification information of the project, a name of the tokens, a quantity of issued tokens, each account to which tokens will be issued, and information on a ratio of tokens allotted to each account to the quantity of issued tokens, and
the first smart contract includes a digital instruction of a protocol for issuing a ratio of tokens allotted to the project team member to the account of the team member according to the share for the project member.

16. The content sharing and creation method of claim 13, wherein the second smart contract includes an address of the contract, a period for receiving the cryptocurrency in the address of the contract, and information on a quantity of tokens transferrable from the address of the contract to addresses of the second users, and
the second smart contract includes a digital instruction for transferring the cryptocurrency received from the second users to the accounts of the second users when all of the quantity of transferrable tokens are not given away within the period for receiving the cryptocurrency.

17. The content sharing and creation method of claim 13, wherein the third smart contract includes information on each step of the progress of the project, an amount or ratio of cryptocurrency designated for each step, an account of the server as a subject which will allow the transfer execution transaction, and information on the account for receiving the designated cryptocurrency.

18. The content sharing and creation method of claim 17, wherein the third smart contract includes a digital instruction of a protocol for transferring the amount or ratio of cryptocurrency designated for each step of the progress of the project from the contract account to the account of the first user on the basis of the amount or ratio of cryptocurrency designated for each step when the transfer execution transaction occurs in each step through a signature of a private key designated by the server.

19. A computer-readable recording medium on which a computer program including instructions causing a processor to perform the method of any one of claims 12 to 18 is recorded.

20. A computer program causing a processor to perform the method of any one of claims 12 to 18 and recorded in a computer-readable recording medium.
